(19) **Europäisches Patentamt**

**European Patent Office**

**Office européen des brevets**

(11) **EP 1 126 739 A1**

(12) # EUROPEAN PATENT APPLICATION

(43) Date of publication:
**22.08.2001 Bulletin 2001/34**

(51) Int Cl.7: **H04Q 11/00**

(21) Application number: **00301170.7**

(22) Date of filing: **15.02.2000**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **LUCENT TECHNOLOGIES INC.**<br>**Murray Hill, New Jersey 07974-0636 (US)** | (72) Inventor: **Rajan, Govinda Nallappa**<br>**1273 KR Huizen (NL)**<br><br>(74) Representative: **Williams, David John et al**<br>**Lucent Technologies UK Limited,**<br>**5 Mornington Road**<br>**Woodford Green, Essex IG8 0TU (GB)** |

(54) **Method of and arrangement for buffering digital optical signals**

(57) A method of and arrangement for buffering during at least a predetermined retention time a digital optical signal (S(i), i = 0, ..., 3) having a predetermined digital level, comprising the following steps:

a) inputting the optical signal (S(i)) to an optical input of a semiconductor laser element (SLE(i));
b) injecting an injection current to said semiconductor laser element (SLE(i)) to establish an optical gain process in said semiconductor laser element (SLE(i)), the injection current having an amplitude such that said optical gain process and an optical absorption process within said semiconductor laser element (SLE(i)) outweigh one another longer than said retention time in order to keep said digital optical signal on said predetermined digital level during said retention time.

*Fig 3*

EP 1 126 739 A1

## Description

Field of the invention

The present invention relates to the field of optical buffers for buffering digital optical signals.

Background of the invention

In Optical Time Division Multiplexing (OTDM) systems long optical fiber loops, sometimes with a length in the order of some kilometers, are used to provide a delay or buffer for lower rate input optical signals before they are transmitted as interleaved output optical signals on one output line. The disadvantages of such systems are mainly their physical dimensions and complexity.

Summary

It is an object of the present invention to provide a method of buffering digital optical signals without using long optical fiber loops.
This object is achieved by a method in accordance with the invention, which relates to a method of buffering during at least a predetermined retention time a digital optical signal having a predetermined digital level, comprising the following steps:

a) inputting the optical signal to an optical input of a semiconductor laser element;
b) injecting an injection current to the semiconductor laser element to establish an optical gain process in the semiconductor laser element, the injection current having an amplitude such that the optical gain process and an optical absorption process within the semiconductor laser element outweigh one another longer than the retention time in order to keep the digital optical signal on the predetermined digital level during the retention time.

In the method according to the invention use is made of a relatively simple arrangement in which a semiconductor laser element is used instead of a long optical fiber loop. Such a buffer arrangement is physically smaller than the long optical fiber loop arrangement according to the prior art. The laser parameters are chosen such that the digital optical signal is trapped between reflective facets of the semiconductor laser element and retains its data characteristics during at least a predetermined retention time.
In order to read the content of such an optical buffer (or optical memory) the method may further comprise the step of outputting the optical signal to an output line by means of an optical output switch connected between an output of the semiconductor laser element and the output line.
In a preferred embodiment of the invention, the method relates to a method of time division multiplexing of a plurality of digital optical signals each having a predetermined digital level, comprising the steps of:

a) inputting each of the optical signals to an optical input of one of a plurality of semiconductor laser elements;
b) injecting a distinct injection current to each of the semiconductor laser elements to establish an optical gain process in each of the semiconductor laser elements, each injection current having an amplitude such that the optical gain process and an optical absorption process within each of the semiconductor laser elements outweigh one another longer than a predetermined retention time in order to keep each of the digital optical signals on each of the predetermined digital levels during the retention time;
c) consecutively outputting each of the optical signals to one output line in consecutive time frames by means of a plurality of optical output switches, each one of the plurality of output switches being connected between an output of one of the semiconductor laser elements and the output line.

The present invention also relates to an arrangement for buffering during at least a predetermined retention time a digital optical signal having a predetermined digital level, comprising:

a) a semiconductor laser element with an optical input for receiving the optical signal;
b) current source means connected to the semiconductor laser element and arranged to inject an injection current to the semiconductor laser element to establish an optical gain process in the semiconductor laser element, in use the injection current having an amplitude such that the optical gain process and an optical absorption process within the semiconductor laser element outweigh one another longer than the retention time in order to keep the digital optical signal on the predetermined digital level during the retention time.

Such an arrangement is physically smaller than the long optical fiber loop arrangements of the prior art and is more flexible.
In a preferred embodiment, a controller is connected to the current source means to provide a current control signal to the current source means to control an amplitude of the injection current.
In order to be sure that the optical gain process and the optical absorption process within the semiconductor laser element outweigh one another, the value of the injection current to the semiconductor laser element can be continuously adjusted by using a feedback control system. In such an arrangement, an optical detector is arranged to detect optical power content of the semiconductor laser element and to provide a feedback signal to the controller, the controller being arranged to generate the current control signal in dependence on the feedback signal.

For reading purposes, the arrangement may comprise an optical output switch connected between an output of the semiconductor laser element and an output line, and connected to the controller to receive an output switch control signal to control outputting of the optical signal to the output line.

In order to be able to control the moment in time that a digital optical signal enters the buffer arrangement, the arrangement preferably comprises an optical input switch connected to the input of the semiconductor laser element, and connected to the controller to receive an input switch control signal to control inputting of the optical signal to the semiconductor laser element.

Finally, the present invention also relates to an arrangement for time division multiplexing of a plurality of digital optical signals each having a predetermined digital level, comprising:

> a) a plurality of semiconductor laser elements each having an optical input for receiving one of the optical signals;
> b) current source means connected to the semiconductor laser elements for injecting a distinct injection current to each of the semiconductor laser elements to establish an optical gain process in each of the semiconductor laser elements, each injection current having an amplitude such that the optical gain process and an optical absorption process within each of the semiconductor laser elements outweigh one another longer than a predetermined retention time in order to keep each of the digital optical signals on each of the predetermined digital levels during the retention time;
> c) a plurality of optical output switches, each one of the plurality of output switches being connected between an output of one of the semiconductor laser elements and one output line;
> d) a controller connected to the plurality of optical output switches to control consecutively outputting each of the optical signals to the output line in consecutive time frames.

Brief description of the drawings

The invention will now be illustrated with reference to some drawings which are intended to illustrate the present invention and not to limit its scope.

> Figure 1 schematically shows an optical multiplex arrangement according to the prior art;
> Figure 2 schematically shows how four different optical signals may be interleaved in a multiplex arrangement according to the prior art;
> Figure 3 shows a multiplex arrangement in accordance with the present invention; and
Figure 4 schematically shows a semiconductor laser element according to the prior art.

Detailed description of the embodiments

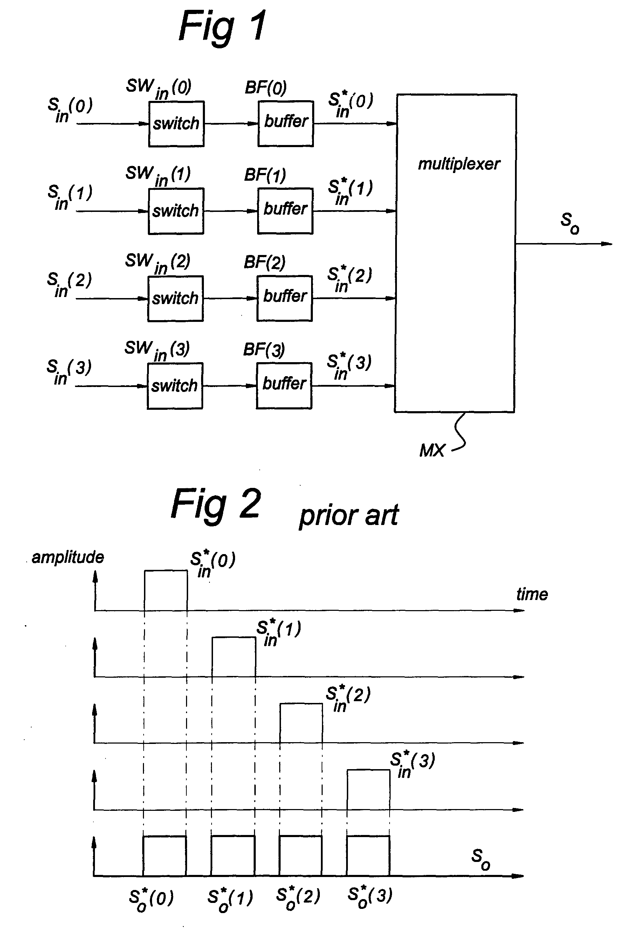

In the multiplex arrangement shown in figure 1, a multiplexer MX receives four different input signals from four different buffers BF(i), (i = 0, 1, 2, ..., I; in the example of the figures I = 3 but I may have any other suitable integer value $\geq 2$). The buffers BF(i) receive respective input signals $S_{in}(i)$. For timing purposes, these input signals $S_{in}(i)$ may be switched by optical switches $SW_{in}(i)$. These switches $SW_{in}(i)$ are, preferably, controlled by a controller not shown in figure 1.

In existing multiplex arrangements, the buffers BF(i) comprise long optical fiber loops of which the length may be in the order of some kilometres, to provide a delay for the input signals $S_{in}(i)$, the delay being different for different input signals $S_{in}(i)$.

The output signals of the buffers BF(i) are indicated in figure 1 by $S_{in}^{*}(i)$.

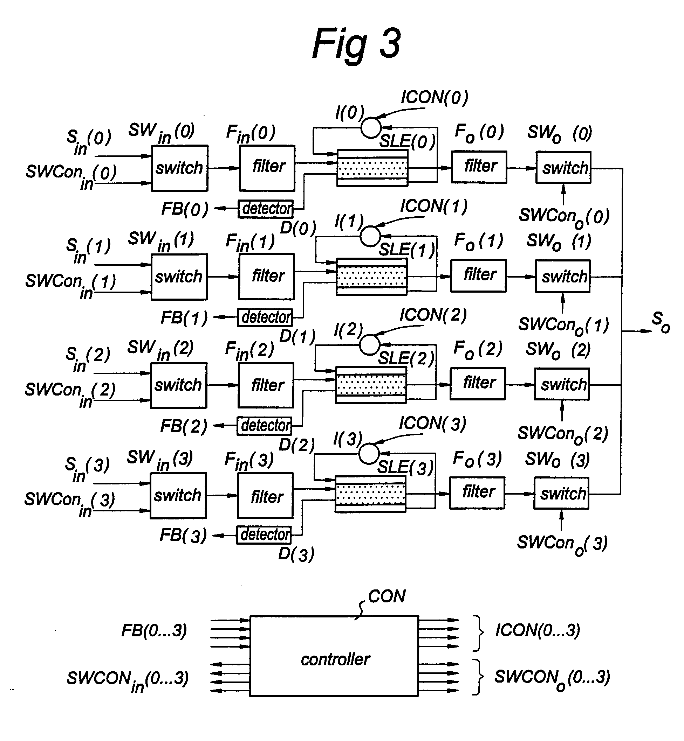

Figure 2 shows an example of the timing of the output signals $S_{in}^{*}(i)$ of the buffers BF(i), as well as of output signal $S_o$ of the multiplexer MX. The buffers BF(i) are designed such that the input signals $S_{in}(i)$ are delayed to such an extent that signals $S_{in}^{*}(i)$ do not overlap and that multiplexer MX only need to switch all signals $S_{in}^{*}(i)$ to its output line to generate output signal $S_o$ comprising four consecutive output signals $S_o^{*}(i)$. The timing of figure 2 suggests that multiplexer MX introduces no further time delays. However, this may well be the case.

Since the buffers BF(i) according to the prior art are relatively large and introduce complexity to the multiplex arrangement, the present invention proposes to use semiconductor laser elements as optical buffer elements. These elements are physically smaller and more flexible than the buffers according to the prior art. Below, it will be explained how this can be achieved.

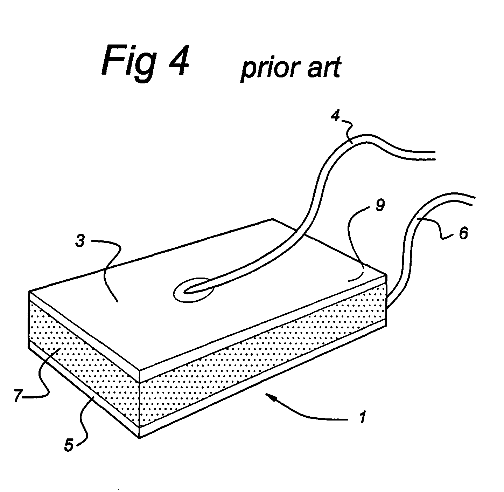

Figure 4 schematically shows a well known semiconductor laser element 1. The laser element 1 comprises a cathode 3 and an anode 5. Between the cathode 3 and the anode 5 there is a semiconductor layer 7 comprising at least a pn-junction as is known to persons skilled in the art. Any simple or more complex semiconductor layer arrangement in layer 7 may be used in the present invention. The cathode 3 is connected to a wire 4, whereas the anode 5 is connected to a wire 6. In use, an electrical current is supplied to the laser element 1 through these wires 4, 6 by a current source (or voltage source). The laser element 1 comprises (cleaved) semireflective ends 7, 9. In use, the semireflective ends 7, 9 reflect emitted photons back into the bulk of the semiconductor material where, by reabsorption, the rate of photon emission is increased, resulting in photon light amplification. If the current through wires 4, 6 to the semiconductor material is increased, a threshold is reached at which the photon density is too great to be contained by the optical cavity defined by the volume of the semiconductor material of layer 7. Then, radiation is emitted from the semiconductor material through the semireflective ends 7, 9. The process of generating radiation by means of a laser is known as "stimulated emission". In use, the stimulated emission has to compete against the absorption process. During the absorption process an electron-hole pair is generated at the expense of an absorbed photon. At the threshold value of the electrical current supplied to the laser element 1, a sufficient number of electrons are present in the conduction band of the semiconductor material to make the semiconductor optically transparent. Above the threshold value, the active region of the semiconductor element 1 exhibits optical gain and amplifies the electromagnetic radiation.

Due to the optical feedback by the semireflective facets 7, 9, that form a Fabry-Perot cavity, the number of photons travelling perpendicular to the semireflective ends 7, 9 increase when the electrical current is high enough to satisfy the condition of net stimulated emission. Some of the photons are lost through the semireflective ends 7, 9 and some get scattered or absorbed in the cavity. Below the threshold value of the electrical current, the loss exceeds gain and the stimulated emission cannot sustain a steady supply of photons. At the threshold value of the electrical current, however, gain equals loss and stimulated emission begins to dominate. Over a narrow electrical current range close to the threshold current value, the gain increases by several orders of magnitude and above the threshold value of the electrical current, the laser output (i.e. the radiation output) increases almost linearly.

At the threshold region, i.e., when optical gain equals loss, ideally any optical signal present within the cavity would simply travel to and fro between the reflective ends 7, 9 and retain its characteristics. The inventor of the present invention has found that this property can be applied to use a semiconductor laser element 1 as a memory for optical signals.

This can be done in an arrangement in which the semiconductor laser element 1 as shown in figure 4 is connected as radiation amplifier element as is known to persons skilled in the art. In such an amplifier arrangement, the semireflective ends 7, 9 are both connected to optical fibers one of which being used as optical input and the other one of which being used as optical output.

An example of the proposed arrangement is shown in figure 3. Figure 3 shows a multiplex arrangement for four different input signals $S_{in}(i)$. The input signals $S_{in}(i)$ are received by optical switches $SW_{in}$. The optical switches $SW_{in}(i)$ are controlled by control signals $SWCON_{in}(i)$ generated by a controller CON.

The output signals of the switches $SW_{in}(i)$ are connected to directive filters $F_{in}(i)$. The outputs of the directional filters $F_{in}(i)$ are connected to optical inputs of semiconductor laser elements SLE(i). Current sources I(i) supply electrical current to the semiconductor laser elements SLE(i). The current sources I(i) receive control signals ICON(i) from the controller CON.

The current sources I(i) may be substituted by voltage sources if required. The current sources I(i) need not be physically separated. One current source arranged to supply as many different electrical currents as there are semiconductor laser elements SLE(i) may be used instead.

Optionally, detectors D(i) may be placed on one of the semireflective ends of the semiconductor elements SLE(i). These detectors D(i) generate electrical feedback signals FB(i) supplied to the controller CON for purposes explained below.

The optical outputs of the semiconductor laser elements SLE(i) are connected to directional filters $F_o(i)$. The outputs of the directional filters $F_o(i)$ are connected to optical output switches $SW_o(i)$. The outputs of optical switches $SW_o(i)$ are connected to one single optical output line for supplying output signal $S_o$. The output optical switches $SW_o(i)$ are controlled by control signals $SWCON_o(i)$ generated by controller CON.

In the arrangement of figure 3, each of the semiconductor laser elements SLE(i) can be used as a memory unit for storing an optical signal ideally for an infinite power-on time, with a write or update cycle and a read cycle.

The optical input signals $S_{in}(i)$ are lower speed signals, e.g., of 2.5 gbs. Each of the optical input signals $S_{in}(i)$ are optical bit type of signals, i.e., they will have a value either representing a digital 1 or a digital 0. The control signals $SWCON_{in}(i)$ are generated by a clock in the controller CON synchronized to control a selected switch $SW_{in}(i)$. The selected switch $SW_{in}(i)$ switches on and allows the optical signal $S_{in}(i)$ to enter the semiconductor laser element SLE(i).

The directional filters $F_{in}(i)$ are arranged such that they allow the signals $S_{in}(i)$ to travel in one direction into semiconductor laser elements SLE(i) only. Such directional filters are known to persons skilled in the art and need no further explanation here. Moreover, they may be located elsewhere: input directional filter $F_{in}(i)$ may be located at the opposite side of $SW_{in}(i)$ whereas output directional filter $F_{o(}i)$ may be located at the opposite side of $SW_o(i)$.

During a write process of a certain semiconductor laser element SLE(i), the respective input switch $SW_{in}(i)$ is switched on whereas the respective output switch $SW_o(i)$ is switched off. Before starting such a write process a memory clear process is necessary. This is due to the following reason: assume the power of an optical signal to be written is low and the power of a previous optical signal was high, then the new value of the optical signal within the semiconductor laser element SLE(i) will also be high if the signal present in the semiconductor element SLE(i) is not removed. Hence, a memory clear process in which the power of the optical signal present in de semiconductor laser element SLE(i) is forced to be low is necessary. This can, e.g., be achieved by turning off the electrical current supplied by current source I(i) concerned for a certain short period of time.

During the period of memorizing the optical signal in the semiconductor laser element SLE(i) the respective output switch $SW_o(i)$ is controlled by its control signal $SWCON_o(i)$ to be in its off-state, i.e. it prevents the optical signal from leaving the semiconductor laser element SLE(i) concerned. So, the optical signal is, then, reflected between the semireflective ends 7, 9 of the semiconductor laser element SLE(i). The amount of reflectivity of the semireflective ends 7, 9 may be specially designed to have an optimal value. It may be designed for a predetermined threshold value of the electrical current supplied by current source I(i). Then, when the electrical current supplied by current source I(i) is close to the threshold current region, the optical gain due to optical feedback caused by the reflectivity of the semireflective ends 7, 9, and due to the received optical signal $S_{in}(i)$ and the value of the electrical current received from current source I(i), just equals the loss due to the absorption process during which an electron-hole pair is generated at the expense of an absorbed photon.

During reading out of the semiconductor elements SLE(i) in the multiplex arrangement shown, each of the output switches $SW_o(i)$ is consecutively switched on to provide output signal $S_o$, e.g., as shown in figure 2. The output switches $SW_o(i)$ can be controlled by the control signals $SWCON_o(i)$ such that output signal $S_o$ has a higher data rate than the input signals $S_{in}(i)$.

Above, an optical multiplexing technique using semiconductor laser elements SLE(i) as memory units for optical bits of information is explained. Of course, the concept shown in figure 3 can be expanded to a plurality of output lines to provide a byte multiplexing technique.

The basic element of the present invention is a semiconductor laser element SLE(i) used as an optical memory unit for an optical bit of information. As explained above, the electrical current supplied by the current source I(i) is chosen such that the optical gain in the semiconductor element SLE(i) substantially equals the absorption of photons in the laser element during memorizing of the optical bit of information. For a predetermined minimum retention time of memorizing the optical bit of information, the reflectivity of the semireflective ends 7, 9 of the semiconductor laser element SLE(i) and the electrical current value can be optimized. Then, one will be sure that, although an optical signal within the semiconductor laser element SLE(i) may steadily change its value due to a small imbalance between optical gain and absorption of photons, the retention time will still exceed the required minimum value. Alternatively, a feedback control system for the electrical current may be used. In such a feedback control system, the detector D(i) detects the optical power of the optical signal present within the semiconductor laser element SLE(i). The feedback signal FB(i) is fed back to controller CON which is arranged to generate current source control signal ICON(i) such that current source I(i) adjusts its electrical current supplied to the semiconductor laser element SLE(i) such that the optical power remains constant (within a small delta change allowed). Such a feedback control is synchronized with the memory write process such that it starts after the memory write process.

It is observed that the arrangements given above are only given by way of example only. For instance, in the arrangement of figure 3, the input switches $SW_{in}(i)$ may be omitted when the optical input signals $S_{in}(i)$ already have a proper timing, i.e., the timing of signals $S_{in}^*(i)$ as shown in figure 2.

Moreover, the controller CON is shown as a single unit. It may be implemented as a software driven (micro)processor arrangement, including necessary equipment like memory (RAM, ROM, EEPROM, etc.), keyboard, mouse, monitor, etc., as is evident to persons skilled in the art. However, it may also be implemented using digital and/or analog circuits, as the case may be. Moreover, it may be implemented as a plurality of processors communicating with one another and arranged for performing subtasks. Thus, where in the claims "a controller" is claimed for performing tasks as specified, this is intended to include all practical embodiments evident to persons skilled in the art.

## Claims

1. A method of buffering during at least a predetermined retention time a digital optical signal (S(i), i = 0, ..., 3) having a predetermined digital level, comprising the following steps:

   a) inputting the optical signal (S(i)) to an optical input of a semiconductor laser element (SLE(i));
   b) injecting an injection current to said semiconductor laser element (SLE(i)) to establish an optical gain process in said semiconductor laser element (SLE(i)), the injection current having an amplitude such that said optical gain process and an optical absorption process within said semiconductor laser element (SLE(i)) outweigh one another longer than said retention time in order to keep said digital optical signal on said predetermined digital level during said retention time.

2. A method according to claim 1, also comprising the following step:
   c) outputting said optical signal (S(i)) to an output line by means of an optical output switch ($SW_o(i)$) connected between an output of said semiconductor laser element (SLE(i)) and said output line.

3. A method of time division multiplexing of a plurality of digital optical signals (S(i), i = 0,..., 3) each having a predetermined digital level, comprising the steps of:

a) inputting each of the optical signals (S(i)) to an optical input of one of a plurality of semiconductor laser elements (SLE(i));

b) injecting a distinct injection current to each of said semiconductor laser elements (SLE(i)) to establish an optical gain process in each of said semiconductor laser elements (SLE(i)), each injection current having an amplitude such that said optical gain process and an optical absorption process within each of said semiconductor laser elements (SLE(i)) outweigh one another longer than a predetermined retention time in order to keep each of said digital optical signals on each of said predetermined digital levels during said retention time;

c) consecutively outputting each of said optical signals (S(i)) to one output line in consecutive time frames by means of a plurality of optical output switches (SW$_o$(i)), each one of said plurality of output switches (SW$_o$(i)) being connected between an output of one of said semiconductor laser elements (SLE(i)) and said output line.

4. A method according to any of the claims 1 through 3, wherein prior to step a) said semiconductor laser element (SLE(i)) is cleared by turning off said injection current during a predetermined clearing time period.

5. An arrangement for buffering during at least a predetermined retention time a digital optical signal (S(i), i = 0, ..., 3) having a predetermined digital level, comprising:

a) a semiconductor laser element (SLE(i)) with an optical input for receiving the optical signal (S(i));

b) current source means (I(i)) connected to said semiconductor laser element (SLE(i)) and arranged to inject an injection current to said semiconductor laser element (SLE(i)) to establish an optical gain process in said semiconductor laser element (SLE(i)), in use the injection current having an amplitude such that said optical gain process and an optical absorption process within said semiconductor laser element (SLE(i)) outweigh one another longer than said retention time in order to keep said digital optical signal on said predetermined digital level during said retention time.

6. An arrangement according to claim 5, comprising a controller (CON) connected to said current source means (I(i)) to provide a current control signal (ICON(i)) to said current source means (I(i)) to control an amplitude of said injection current.

7. An arrangement according to claim 6, comprising an optical detector (D(i)) arranged to detect optical power content of said semiconductor laser element (SLE(i)) and to provide a feedback signal (FB(i)) to said controller (CON), said controller being arranged to generate said current control signal (ICON(i)) in dependence on said feedback signal (FB(i)).

8. An arrangement according to claim 6 or 7, comprising an optical output switch (SW$_o$(i)) connected between an output of said semiconductor laser element (SLE(i)) and an output line, and connected to said controller (CON) to receive an output switch control signal (SWCON$_o$(i)) to control outputting said optical signal (S(i)) to said output line.

9. An arrangement according to claim 8, comprising an optical output directional filter (F$_o$(i)) connected between said output of said semiconductor laser element (SLE(i)) and said optical output switch (SW$_o$(i)).

10. An arrangement according to any of the claims 6 through 9, comprising an optical input switch (SW$_{in}$(i)) connected to said input of said semiconductor laser element (SLE(i), and connected to said controller (CON) to receive an input switch control signal (SWCON$_{in}$(i)) to control inputting said optical signal (S(i)) to said semiconductor laser element (SLE(i)).

11. An arrangement according to claim 10, comprising an optical input directional filter (F$_{in}$(i)) connected between said input of said semiconductor laser element (SLE(i)) and said optical input switch (SW$_{in}$(i)).

12. An arrangement according to any of the claims 10 or 11, wherein said controller (CON) is arranged for controlling said current source means (I(i)) such that said current source means (I(i)) clears said semiconductor laser element (SLE(i)) by turning off said injection current during a predetermined clearing time period prior to switching said digital optical signal (S$_{in}$(i)) to said semiconductor laser element (SLE(i)) by said optical input switch (SW(i)).

13. An arrangement for time division multiplexing of a plurality of digital optical signals (S(i), i = 0, ..., 3) each having a predetermined digital level, comprising:

a) a plurality of semiconductor laser elements (SLE(i)) each having an optical input for receiving one of said optical signals (S(i));

b) current source means (I(i)) connected to said semiconductor laser elements (SLE(i)) for injecting a distinct injection current to each of said semiconductor laser elements (SLE(i)) to establish an optical gain process in each of said semiconductor laser elements (SLE(i)), each injection current having an amplitude such that said optical gain process and an optical absorption process within each of said semiconductor laser elements (SLE(i)) outweigh one another longer than a predetermined retention time in order to keep each of said digital optical signals on each of said predetermined digital levels during said retention time;

c) a plurality of optical output switches (SW$_o$(i)), each one of said plurality of output switches (SW$_o$(i)) being connected between an output of one of said semiconductor laser elements (SLE(i)) and one output line;

d) a controller (CON) connected to said plurality of optical output switches (SW$_o$(i)) to control consecutively outputting each of said optical signals (S(i)) to said output line in consecutive time frames.

# Fig 1

# Fig 2 prior art

# Fig 3

# Fig 4    prior art

## EUROPEAN SEARCH REPORT

European Patent Office

**Application Number**

EP 00 30 1170

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 608 682 A (NAGASHIMA KUNIO ET AL) 26 August 1986 (1986-08-26) | 1,3,5,13 | H04Q11/00 |
| A | * column 1, line 24 - line 53 * <br> * column 3, line 39 - column 7, line 17 * <br> * column 7, line 59 - column 8, line 19 * <br> * figures 2,3,9 * | 2,4,6-12 | |
| X | EP 0 765 097 A (NIPPON ELECTRIC CO) 26 March 1997 (1997-03-26) | 1,3,5,13 | |
| A | * column 4, line 38 - column 7, line 41 * | 2,4,6-12 | |

**TECHNICAL FIELDS SEARCHED (Int.Cl.7)**

H04Q

The present search report has been drawn up for all claims

| Place of search | Date of completion of the search | Examiner |
|---|---|---|
| THE HAGUE | 28 June 2000 | Meurisse, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

11

**ANNEX TO THE EUROPEAN SEARCH REPORT
ON EUROPEAN PATENT APPLICATION NO.**

EP 00 30 1170

This annex lists the patent family members relating to the patent documents cited in the above-mentioned European search report.
The members are as contained in the European Patent Office EDP file on
The European Patent Office is in no way liable for these particulars which are merely given for the purpose of information.

28-06-2000

| Patent document cited in search report | | Publication date | Patent family member(s) | | Publication date |
|---|---|---|---|---|---|
| US 4608682 | A | 26-08-1986 | JP | 59099855 A | 08-06-1984 |
| | | | JP | 1752654 C | 08-04-1993 |
| | | | JP | 4039837 B | 30-06-1992 |
| | | | JP | 59107675 A | 21-06-1984 |
| | | | CA | 1206633 A | 24-06-1986 |
| | | | DE | 3374040 D | 12-11-1987 |
| | | | EP | 0110388 A | 13-06-1984 |
| EP 0765097 | A | 26-03-1997 | JP | 4260295 A | 16-09-1992 |
| | | | JP | 4262697 A | 18-09-1992 |
| | | | CA | 2061141 A,C | 15-08-1992 |
| | | | EP | 0499255 A | 19-08-1992 |
| | | | US | 5404240 A | 04-04-1995 |

EPO FORM P0459

For more details about this annex : see Official Journal of the European Patent Office, No. 12/82